# FASCICULE DE BREVET EUROPEEN

(11) **EP 3 154 172 B1**
(45) Date de publication et mention de la délivrance du brevet: **14.09.2022**
(21) Numéro de dépôt: 16192086.3
(22) Date de dépôt: 03.10.2016
(51) Int. Cl.: H02K 1/16, H02K 7/14, H02K 11/21, H02K 1/14, H02K 3/18, H02K 11/215

(54) **MOTEUR ELECTRIQUE**
ELEKTROMOTOR
ELECTRIC MOTOR

(30) Priorité: 05.10.2015 FR 1559460
(43) Date de publication de la demande: 12.04.2017
(73) Titulaire: Safran Landing Systems, 78140 Vélizy-Villacoublay (FR)
(72) Inventeur: EVENOR, Eric, 78140 VELIZY-VILLACOUBLAY (FR); LEYNAERT, François-Noël, 78140 VELIZY-VILLACOUBLAY (FR); PIERRAT, Raphaël, 78140 VELIZY-VILLACOUBLAY (FR)
(74) Mandataire: Lavaud, Thomas

(56) Documents cités:
- WO-A1-2005/112226
- WO-A2-2014/170414
- US-A- 4 942 323
- US-A1- 2006 033 400
- US-A1- 2014 269 837

## Description

L'invention concerne le domaine des moteurs électriques tels que ceux équipant des actionneurs électromécaniques utilisés dans les aéronefs ou autres véhicules.

### ARRIERE PLAN DE L'INVENTION

On trouve de nombreux actionneurs électromécaniques dans les aéronefs modernes, utilisés dans des applications variées : commandes de vol, freinage des roues, entraînement en rotation des roues, etc.

Les actionneurs électromécaniques comportent un organe d'actionnement et un moteur électrique adapté à entraîner l'organe d'actionnement.

La conception d'un moteur électrique d'un actionneur électromécanique doit répondre à des spécifications au niveau « équipement » et au niveau « système ». Ces spécifications, qui dépendent de l'application dans laquelle est utilisé le moteur électrique, déclinent de nombreuses et contraignantes exigences qui impactent la fabrication du moteur électrique.

Parmi ces exigences, on trouve en particulier des exigences d'intégration (par exemple des exigences relatives au volume du moteur électrique ou à l'intégration de composants électriques d'alimentation ou de surveillance dans le moteur électrique), des exigences d'architecture (par exemple une exigence de redondance qui conduit à munir le moteur électrique de deux bobinages distincts), des exigences en matière de robustesse mécanique (par exemple une exigence de résistance aux chocs, aux vibrations), etc.

Le moteur électrique doit être conforme à l'ensemble de ces exigences, ce qui rend sa fabrication relativement complexe.

Le document WO 2005/112226 A1 décrit un moteur électrique de l'art antérieur comprenant des boulons utilisés pour lier entre elles des parties fixes du moteur électrique.

### OBJET DE L'INVENTION

L'invention a pour objet un moteur électrique susceptible d'être équipé de composants électriques et qui soit robuste, compact et relativement simple à fabriquer.

### RESUME DE L'INVENTION

En vue de la réalisation de ce but, on propose un moteur électrique selon la revendication 1.

L'utilisation de la tige positionnée dans le logement ménagé sur toute la longueur du corps permet un assemblage simple et robuste du moteur électrique. Cet assemblage est particulièrement adapté pour fixer au corps une carte électrique positionnée sur une face du corps du stator du moteur électrique.

D'autres caractéristiques et avantages de l'invention ressortiront à la lecture de la description qui suit d'un mode de réalisation particulier, non limitatif de l'invention.

### BREVE DESCRIPTION DES DESSINS

Il sera fait référence aux dessins annexés parmi lesquels :
- la figure 1 est une vue en perspective d'un moteur électrique selon un premier mode de réalisation de l'invention ;
- la figure 2 est une vue analogue à celle de la figure 1, dans laquelle une partie centrale d'une carte électrique du moteur électrique n'est pas représentée pour rendre apparent l'intérieur d'un stator du moteur électrique ;
- la figure 3 est une vue éclatée du moteur électrique de l'invention selon le premier mode de réalisation ;
- la figure 4 est une vue en perspective d'un moteur électrique selon un deuxième mode de réalisation de l'invention ;
- la figure 5 est une vue analogue à celle de la figure 4, dans laquelle une partie centrale d'une carte électrique du moteur électrique n'est pas représentée pour rendre apparent l'intérieur d'un stator du moteur électrique ;
- la figure 6 représente une portion d'un segment radial utilisé pour fabriquer un corps du stator du moteur électrique selon le deuxième mode de réalisation de l'invention ;
- la figure 7 représente le corps du stator du moteur électrique selon le deuxième mode de réalisation de l'invention préalablement à son assemblage.

### DESCRIPTION DETAILLEE DE L'INVENTION

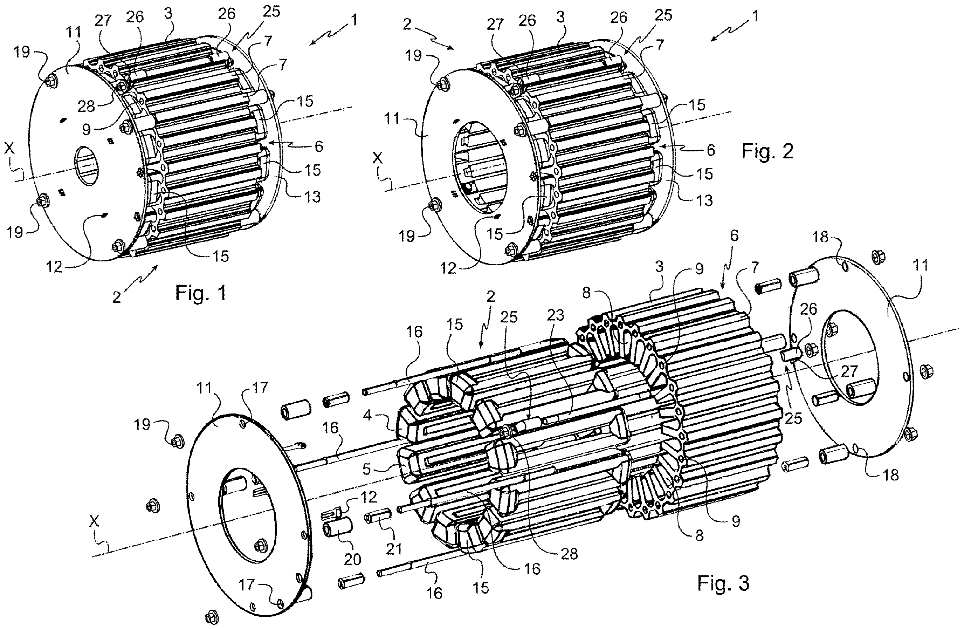

En référence aux figures 1 à 3, le moteur électrique 1, selon le premier mode de réalisation de l'invention, comporte un carter de forme extérieure générale cylindrique (non représenté) à l'intérieur duquel sont intégrés un stator fixe 2 et un rotor (non représenté) entraîné en rotation autour d'un axe X.

Le stator 2 comporte un corps 3, un premier ensemble de bobinage 4 et un deuxième ensemble de bobinage 5 distinct et magnétiquement découplé du premier ensemble de bobinage 4.

Le corps 3 du stator 2 a une forme générale tubulaire avec une surface interne sensiblement cylindrique pour accueillir le rotor et une surface externe sensiblement cylindrique. Le corps 3 est constitué d'une pluralité de tôles formant une carcasse et empilées selon une direction axiale (en l'occurrence, selon l'axe X).

Le corps 3 du stator 2 est en une seule pièce dans ce mode de réalisation et comprend une pluralité de secteurs radiaux 6 qui sont répartis régulièrement sur la circonférence du corps 3 du stator 2 et qui s'étendent sur toute la longueur du corps 3 du stator 2.

Chaque secteur radial 6 comporte une nervure radiale interne dont la surface terminale forme une portion longitudinale de la surface interne du corps 3 et une nervure radiale externe 7 dont la surface terminale forme la surface externe du corps 3.

Les nervures radiales internes des secteurs radiaux 6 délimitent entre elles des encoches 8 ouvertes à leurs extrémités et vers l'intérieur du corps 3.

Des logements 9 sont ménagés dans le corps 3 à la périphérie du corps 3 et sur toute sa longueur parallèlement à l'axe central du corps 3 pour déboucher de part et d'autre du corps 3. Chaque logement 9 est positionné au niveau d'un secteur radial 6 et est ménagé entre la surface interne du corps 3 et la surface externe du corps 3 partiellement à l'intérieur de la nervure 7 du secteur radial 6 concerné.

Le premier ensemble de bobinage 4 et le deuxième ensemble de bobinage 5 sont reçus dans les encoches 8 du corps 3 du stator 2.

Le moteur électrique 1 comporte de plus une première carte électrique 11 comprenant des premiers composants électriques 12 et une deuxième carte électrique 13 comprenant des deuxièmes composants électriques.

Les premiers composants électriques 12, tout comme les deuxièmes composants électriques , comportent des capteurs à effet Hall destinés à mesurer la position du rotor pour piloter le moteur électrique 1.

On obtient ainsi une architecture redondante (« full duplex ») : le moteur électrique 1 peut être piloté et donc fonctionner malgré une panne survenant sur la première carte électrique 11 ou sur la deuxième carte électrique 13, ou impactant le premier ensemble de bobinage 4 ou le deuxième ensemble de bobinage 5.

La première carte électrique 11 et la deuxième carte électrique 13 sont des cartes électriques de forme annulaire dont le diamètre extérieur est sensiblement égal au diamètre extérieur du corps 3 du stator 2 (incluant la hauteur des nervures 7). La première carte électrique 11 et la deuxième carte électrique 13 sont positionnées chacune sur une face différente du corps 3 en étant montées parallèlement à ladite face et posée contre des chignons 15 du premier ensemble de bobinage 4 et du deuxième ensemble de bobinage 5.

Le corps 3 du stator 2, la première carte électrique 11 et la deuxième carte électrique 13 sont assemblés grâce à des tiges 16 (ici quatre tiges) qui s'étendent dans quatre logements 9 régulièrement répartis sur la circonférence du corps 3 du stator 2.

La longueur de chaque tige 16 est supérieure à celle du corps 3 du stator 2. Ainsi, une première extrémité de chaque tige 16 débouche du logement 9 dans lequel elle est positionnée et s'étend depuis la face concernée du corps 3 du stator 2 jusqu'à la première carte électrique 11 en longeant les chignons 15, puis s'étend au travers d'un trou de fixation 17 ménagé dans la première carte électrique 11. De même, une deuxième extrémité de chaque tige 16 débouche du logement 9 dans lequel elle est positionnée et s'étend depuis la face concernée du corps 3 du stator 2 jusqu'à la deuxième carte électrique 13 en longeant des chignons 15, puis s'étend au travers d'un trou de fixation 18 ménagé dans la deuxième carte électrique 13.

La première carte électrique 11 et la deuxième carte électrique 13 sont fixées à chaque tige 16 grâce à un écrou 19.

Une entretoise 20 et une douille 21 s'étendent autour de la première extrémité de chaque tige 16 entre la face concernée du corps 3 du stator 2 et la première carte électrique 11.

De même, une entretoise 20 et une douille 21 s'étendent autour de la deuxième extrémité de chaque tige 16 entre la face concernée du corps 3 du stator 2 et la deuxième carte électrique 13.

On note que les tiges 16 sont creuses, et que des câbles électriques cheminent à l'intérieur des tiges 16 pour alimenter la première carte électrique 11 et la deuxième carte électrique 13.

On réalise ainsi un assemblage simple et robuste du corps 3 du stator 2, de la première carte électrique 11 et de la deuxième carte électrique 13.

On note qu'une cinquième tige 23, plus courte que les tiges 16, s'étend dans un cinquième logement 9. Cette cinquième tige 23 présente deux extrémités qui chacune débouche sur une face différente du corps 3 du stator 2. La cinquième tige 23 est utilisée pour fixer au corps 3 deux ergots d'anti-rotation 25 destinés à solidariser en rotation le corps 3 du stator 2 et le carter du moteur électrique 1. Chaque ergot 25 comporte une partie courante 26 de section semi-circulaire ayant une surface plate disposée sur une partie de la longueur d'une nervure 7 d'un secteur radial 6, et une base 27 percée d'un trou de fixation. La partie courante 26 réalise la fonction d'anti-rotation. Le trou de fixation de la base 27 permet de fixer l'ergot 25 au corps 3 du stator 2 grâce à la cinquième tige 23 qui s'étend au travers du trou de fixation, et grâce à un écrou 28.

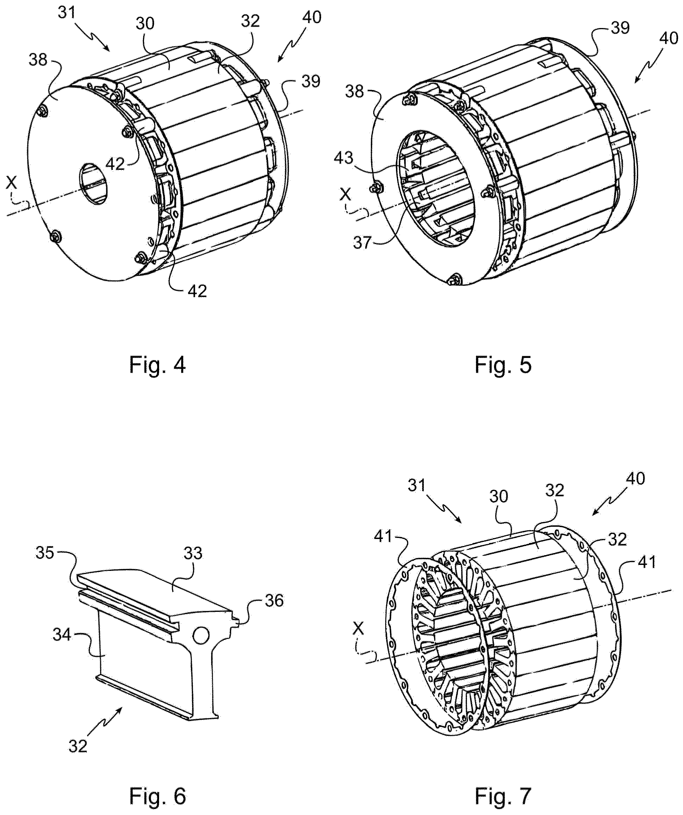

En référence aux figures 4 à 7, le moteur électrique selon un deuxième mode de réalisation de l'invention 40 comporte un stator 31 comprenant un corps creux 30 de forme extérieure cylindrique.

Le corps 30 est constitué d'une pluralité de tôles formant une carcasse et empilées selon une direction axiale (en l'occurrence, selon l'axe X).

Dans le deuxième mode de réalisation de l'invention, le corps 30 du stator 31 du moteur électrique 40 est constitué de l'assemblage de segments radiaux distincts 32 s'étendant sur toute la longueur du corps 30. Chaque segment radial 32 comporte une base 33 définissant un secteur circulaire et une partie courante 34. Une rainure 35 et une nervure 36 sont formées sur la base 33 de chaque segment radial 32. Les segments radiaux 32 sont assemblés grâce à la rainure 35 et à la nervure 36 de la base 33 de chaque segment radial 32 pour former le corps 30 du stator 31.

Lorsque les segments radiaux 32 sont assemblés, les secteurs circulaires des bases 33 définissent la forme extérieure cylindrique du corps 30 du stator 31 et les parties courantes 34 s'étendent radialement vers l'intérieur du corps 30 du stator 31 et forment des encoches dans lesquelles sont reçus un premier ensemble de bobinage 43 et un deuxième ensemble de bobinage 37.

Le moteur électrique 40 comporte de plus une première carte électrique 38 et une deuxième carte électrique 39 ayant le même rôle que dans le premier mode de réalisation de l'invention. L'assemblage du moteur 40 est similaire à celui du premier mode de réalisation, si ce n'est que le moteur électrique 40 selon le deuxième mode de réalisation comporte en outre deux couronnes de fixation 41 plates annulaires positionnées chacune contre une face différente du corps 30 du stator 31. Les couronnes de fixation 41 solidarisent entre eux les segments radiaux distincts 32. Les couronnes de fixation 41 sont traversées par les quatre tiges utilisées pour assembler le corps 30, la première carte électrique 38 et la deuxième carte électrique 39, et sont fixées axialement grâce aux entretoises 42 qui s'étendent entre chaque carte électrique 38, 39 et la face du corps 30 du stator 31 sur laquelle elle est positionnée.

Dans un troisième mode de réalisation de l'invention, le corps du stator est constitué d'une pluralité de tôles formant une carcasse et empilées selon une direction axiale (en l'occurrence, selon l'axe X).

Chaque tôle comporte des trous de fixation. Lorsque les tôles sont empilées, les trous de fixations sont positionnés au regard les uns des autres de manière à former des logements qui s'étendent sur toute la longueur du corps. Les tiges débouchent au niveau d'une tôle supérieure du corps et au niveau d'une tôle inférieure du corps pour être fixées à la tôle supérieure et à la tôle inférieure grâce à des moyens de fixation comprenant à nouveau des écrous. Alternativement, les couronnes de fixation du deuxième mode de réalisation et les entretoises peuvent aussi être utilisées avec les tiges pour assembler les tôles et les cartes électriques.

On note ici que les tiges peuvent aussi servir d'arrêts en translation du moteur électrique ou de ponts thermiques pour évacuer la chaleur générée par le fonctionnement du moteur.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait décrit un moteur équipé de deux cartes électriques, le moteur peut parfaitement comporter une seule carte électrique positionnée comme l'une des première ou deuxième carte électrique (architecture de type simplex).

Bien que l'on ait indiqué que les premiers composants électriques et les deuxièmes composants électriques comportent des capteurs à effet Hall destinés à mesurer la position du rotor pour piloter le moteur électrique 1, les cartes électriques peuvent parfaitement comporter des composants électriques différents, par exemple des capteurs d'un autre type ou bien des composants destinés à générer un courant électrique d'alimentation du moteur électrique circulant dans les bobinages.

Le corps 3 du premier mode de réalisation peut aussi être en plusieurs pièces.

## Revendications

1. Moteur électrique (1 ; 40) comportant un rotor et un stator (2 ; 31), le stator (2; 31) comprenant un corps (3 ; 30) formant carcasse et un ensemble de bobinage (4, 5 ; 43, 37) reçu dans des encoches (8) du corps (3; 30), le moteur électrique (1 ; 40) comprenant au moins une tige (16, 23) utilisée pour lier entre elles au moins deux parties assemblées fixes du moteur électrique (1; 40), la longueur de chaque tige (16, 23) étant supérieure à celle du corps (3; 30) du stator (2; 31), la tige (16, 23) s'étendant dans un logement (9) ménagé dans le corps (3; 30) sur toute sa longueur pour déboucher de part et d'autre du corps (3; 30), **caractérisé en ce que** les parties assemblées comportent le corps (3; 30) et une carte électrique (11, 13 ; 38, 39) positionnée sur une face du corps (3; 30) et comportent des composants électriques (12), une première extrémité de chaque tige (16, 23) débouche du logement dans lequel elle est positionnée et s'étend depuis la face concernée du corps (3; 30) du stator (2; 31) jusqu'à la carte électrique (11, 13, 38, 39) en longeant des chignons (15), ladite première extrémité de chaque tige (16, 23) s'étend au travers d'un trou de fixation (17, 18) ménagé dans la carte électrique (11, 13, 38, 39), la carte électrique (11, 13, 38, 39) est fixée à chaque tige (16, 23) grâce à un écrou (19), une entretoise (20) et une douille (21) s'étendent autour de la première extrémité de chaque tige (16, 23) entre la face concernée du corps (3, 30) du stator (2, 31) et la carte électrique (11, 13, 38, 39)

2. Moteur électrique (1 ; 40) selon la revendication 1, dans lequel les composants électriques (12) comportent des capteurs destinés à mesurer une position du rotor.

3. Moteur électrique (1 ; 40) selon la revendication 1 comprenant deux ensembles de bobinage (4, 5; 43, 37) distincts reçus dans les encoches (8) du corps (3; 30), les parties assemblées comportant le corps (3;30) et deux cartes électriques (11, 13, 38, 39) positionnées chacune sur une face différente du corps (3; 30).

4. Moteur électrique (1 ; 40) selon la revendication 1, dans lequel un câble électrique relié électriquement à la carte électrique chemine à l'intérieur de la tige (16, 23).

5. Moteur électrique (1 ; 40) selon la revendication 1, dans lequel les parties assemblées comportent des segments radiaux distincts (32) constituant le corps (3; 30) et définissant les encoches (8).

6. Moteur électrique (1 ; 40) selon la revendication 5, dans lequel deux couronnes (41) positionnées chacune contre une face différente du corps (3; 30) et au travers desquelles s'étend la tige (16, 23) sont aussi utilisées pour lier entre eux les segments radiaux (32).

7. Moteur électrique (1 ; 40) selon la revendication 1, dans lequel les parties assemblées comportent des tôles empilées selon une direction axiale (X) pour former le corps (3; 30).

8. Moteur électrique (1 ; 40) selon la revendication 1, dans lequel les parties assemblées comportent le corps (3; 30) et un carter du moteur électrique (1; 40), et dans lequel la tige (16, 23) permet de fixer au corps (3; 30) un ergot d'anti-rotation (25) destiné à solidariser en rotation le corps (3; 30)) et le carter.

9. Moteur électrique (1 ; 40) selon l'une des revendications précédentes, dans lequel le logement (9) est situé à la périphérie du corps (3; 30).

10. Actionneur électromécanique comprenant un organe d'actionnement et un moteur électrique (1 ; 40) selon l'une des revendications précédentes utilisé pour entraîner l'organe d'actionnement.

## Patentansprüche

1. Elektromotor (1; 40), umfassend einen Rotor und einen Stator (2; 31), wobei der Stator (2; 31) einen ein Gehäuse bildenden Körper (3; 30) und eine Wicklungsanordnung (4, 5; 43, 37) umfasst, die in Nuten (8) des Körpers (3; 30) aufgenommen ist, wobei der Elektromotor (1; 40) mindestens eine Stange (16; 23) umfasst, die verwendet wird, um mindestens zwei feste zusammengesetzte Teile des Elektromotors (12; 40) miteinander zu verbinden, wobei die Länge jeder Stange (16, 23) größer als die des Körpers (3; 30) des Stators (2; 31) ist, wobei sich die Stange (16, 23) in einer in dem Körper (3; 30) über dessen gesamte Länge ausgebildeten Aufnahme (9) erstreckt, um auf beiden Seiten des Körpers (3; 30) zu münden, **dadurch gekennzeichnet, dass** die zusammengesetzten Teile den Körper (3; 30) und eine Leiterplatte (11, 15, 13; 38, 39) umfassen, die auf einer Seite des Körpers (3; 30) positioniert ist und elektrische Komponenten (12) umfasst, ein erstes Ende jeder Stange (16, 23) aus der Aufnahme, in der sie positioniert ist, mündet und sich ab der betreffenden Seite des Körpers (3; 30) des Stators (2; 31) bis zur Leiterplatte (11, 13, 38, 39) erstreckt, indem sie an Überhängen (15) entlangläuft, sich das genannte erste Ende jeder Stange (16, 23) durch ein Befestigungsloch (17, 18) erstreckt, das in der Leiterplatte (11, 13, 38, 39) ausgebildet ist, die Leiterplatte (11, 13, 38, 39) an jeder Stange (16, 23) dank einer Mutter (19) befestigt ist, ein Abstandshalter (20) und eine Hülse (21) sich um das erste Ende jeder Stange (16, 23) zwischen der betreffenden Seite des Körpers (3, 30) des Stators (2, 31) und der Leiterplatte (11, 13, 38, 39) erstrecken.

2. Elektromotor (1; 40) nach Anspruch 1, bei dem die elektrischen Komponenten (12) Sensoren umfassen, die dazu bestimmt sind, eine Position des Rotors zu messen.

3. Elektromotor (1; 40) nach Anspruch 1, umfassend zwei separate Wicklungsanordnungen (4, 5; 43, 37), die in den Nuten (8) des Körpers (3; 30) aufgenommen sind, wobei die zusammengesetzten Teile den Körper (3; 30) und zwei Leiterplatten (1, 13, 38 39) umfassen, die jeweils auf einer anderen Seite des Körpers (3; 30) positioniert sind.

4. Elektromotor (1; 40) nach Anspruch 1, bei dem ein elektrisches Kabel, das elektrisch mit der Leiterplatte verbunden ist, im Inneren der Stange (16; 23) verläuft.

5. Elektromotor (1; 40) nach Anspruch 1, bei dem die zusammengesetzten Teile separate radiale Segmente (32) umfassen, die den Körper (3; 30) bilden und die Nuten (8) definieren.

6. Elektromotor (1; 40) nach Anspruch 5, bei dem zwei Kränze (41), die jeweils an einer anderen Seite des Körpers (3; 30) positioniert sind und durch die sich die Stange (16; 23) erstreckt, ebenfalls verwendet werden, um die radialen Segmente (32) miteinander zu verbinden.

7. Elektromotor (1; 40) nach Anspruch 1, bei dem die zusammengesetzten Teile Bleche umfassen, die in axialer Richtung (X) gestapelt sind, um den Körper (3; 30) zu bilden.

8. Elektromotor (1; 40) nach Anspruch 1, bei dem die zusammengesetzten Teile den Körper (3; 30) und ein Gehäuse des Elektromotors (1; 40) umfassen, und bei dem die Stange (16; 23) ein Befestigen eines Verdrehsicherungsstiftes (25) am Körper (3; 30) ermöglicht, der dazu bestimmt ist, den Körper (3; 30) und das Gehäuse drehfest zu verbinden.

9. Elektromotor (1; 40) nach einem der vorhergehenden Ansprüche, bei dem sich die Aufnahme (9) am Umfang des Körpers (3; 30) befindet.

10. Elektromechanischer Aktor, umfassend ein Betätigungsorgan und einen Elektromotor (1; 40) nach einem der vorhergehenden Ansprüche, der zum Antreiben des Betätigungsorgans verwendet wird.

## Claims

1. Electric motor (1; 40) comprising a rotor and a stator (2; 31), the stator (2; 31) comprising a body (3; 30) forming a frame and a windings assembly (4, 5; 43, 37) housed in slots (8) of the body (3; 30), the electric motor (1; 40) comprising at least one rod (16, 23) used to connect, to one another, at least two fixed assembled parts of the electric motor (1; 40), the length of each rod (16, 23) being greater than that of the body (3; 30) of the stator (2; 31), the rod (16, 23) extending into a housing (9) formed in the body (3; 30) over the entire length thereof in order to emerge on each side of the body (3; 30), **characterized in that** the assembled parts comprise the body (3; 30) and an electric board (11, 13; 38, 39) positioned on one face of the body and comprise electrical components (12), a first end of each rod (16, 23) emerges from the housing in which it is positioned and extends from the relevant face of the body (2; 30) of the stator (2; 31) as far as the electric board (11, 13; 38, 39), running alongside winding overhangs (15), said first end of each rod (16; 23) extending through a fixing hole (17; 18) formed in the electric board (11; 13; 38; 39), the electric board (11, 13; 38, 39) being fixed to each rod (16, 23) using a nut (19), a spacer piece (20) and a bushing (21) extending around the first end of each rod (16, 23) between the relevant face of the body (3, 30) of the stator (2, 31) and the electric board (11, 13; 38, 39).

2. Electric motor (1; 40) according to Claim 1, in which the electric components comprise sensors intended to measure a position of the rotor.

3. Electric motor (1; 40) according to Claim 1 comprising two separate coil assemblies (4, 5; 43; 37) housed in the slots (8) of the body (3; 30), the assembled parts comprising the body (3; 30) and two electric boards (11, 13, 38, 39) each one positioned on a different face of the body (3; 30).

4. Electric motor (1; 40) according to Claim 1, in which an electric lead electrically connected to the electric board is routed along inside the rod.

5. Electric motor (1; 40) according to Claim 1, in which the assembled parts comprise distinct radial segments (32) constituting the body (3; 30) and defining the slots (8) .

6. Electric motor (1; 40) according to Claim 5, in which two annular rings (41) each one positioned against a different face of the body (3; 30) and through which the rod (16; 23) extends are also used to join the radial segments (32) together.

7. Electric motor (1; 40) according to Claim 1, in which the assembled parts comprise laminations stacked in an axial direction (X) to form the body (3; 30).

8. Electric motor (1; 40) according to Claim 1, in which the assembled parts comprise the body (3; 30) and a casing of the electric motor (1; 40), and in which the rod (16; 23) allows the attachment to the body (3; 30) of a rotation-proofing lug (25) intended to secure the body (3; 30) and the casing in terms of rotation.

9. Electric motor according to one of the preceding claims, in which the housing (9) is situated at the periphery of the body (3; 30).

10. Electromagnetic actuator comprising an actuating member and an electric motor (1; 40) according to one of the preceding claims, used to drive the actuating member.
